# EUROPÄISCHE PATENTSCHRIFT

(11) **EP 1 325 684 B1**
(45) Veröffentlichungstag und Bekanntmachung des Hinweises auf die Patenterteilung: **11.05.2005**
(21) Anmeldenummer: 02028601.9
(22) Anmeldetag: 20.12.2002
(51) Int. Cl.: A24C 5/60, B23K 26/08

(54) **Vorrichtung zum Perforieren von stabförmigen Gegenstände, insbesondere der Tabak verarbeitenden Industrie**
Device for perforating rod-like objects, especially of the tobacco industry
Dispositif pour perforer produits en forme de tige, surtout de l'industrie du tabac

(30) Priorität: 08.01.2002 DE 10200402
(43) Veröffentlichungstag der Anmeldung: 09.07.2003
(73) Patentinhaber: Hauni Maschinenbau AG, 21033 Hamburg (DE)
(72) Erfinder: Dombeck, Manfred, 21521 Dassendorf (DE)
(74) Vertreter: Meier, Frank

(56) Entgegenhaltungen:
- EP-A- 1 018 392
- GB-A- 1 602 133
- US-A- 4 349 719
- US-A- 4 720 619

## Beschreibung

Die Erfindung betrifft eine Vorrichtung zum Herstellen von Zonen gewünschter Luftdurchlässigkeit im Hüllmaterial stabförmiger Gegenstände insbesondere der Tabak verarbeitenden Industrie, mit einem um eine Drehachse drehbar gelagerten Drehkörper mit mindestens einer Reflexionsfläche zur Reflexion eines energiereichen Strahls während der Rotation des Drehkörpers zur Erzeugung von Perforationszonen auf dem Hüllmaterial, wobei die Reflexionsfläche mindestens einen Abschnitt aufweist, der einen derart gebogenen oder gekrümmten Verlauf hat, dass bei Rotation des Drehkörpers der von diesem Abschnitt reflektierte Strahl wandert.

Unter stabförmigen Gegenständen der Tabak verarbeitenden Industrie sollen im hier vorliegenden Zusammenhang alle diejenigen Artikel verstanden werden, die im Zuge ihrer Herstellung oder hinterher mit einer Perforation versehen werden.

Dies sind in erster Linie Filterzigaretten, können aber auch andere Arten von Zigaretten, andere stabförmige Rauchartikel oder Filterstäbe sein. Unter Hüllmaterial sind Streifen zum Umhüllen von Tabaksträngen oder Filtersträngen, Belagpapierstreifen, Belagpapierblättchen usw. zu verstehen, die als Materialbahn, gebrauchsfertige Abschnitte oder Hülle der stabförmigen Gegenstände perforiert werden können.

Durch die Perforation des Hüllmaterials von Zigaretten und anderen stabförmigen Rauchartikeln entsteht in deren Umhüllung eine Zone gewünschter Luftdurchlässigkeit, durch die der Raucher beim Rauchen Nebenluft ansaugt. Dadurch werden die Anteile von Nikotin und Kondensat im Rauch beeinflusst, was auch geschmackliche Auswirkungen hat. Für die Perforation des Hüllmaterials wird vorzugsweise ein Laser eingesetzt, dessen Strahlung über eine Optik in die jeweiligen Perforationszonen gelenkt wird und dort die gewünschten Löcher gleichmäßig und reproduzierbar in das Hüllmaterial einbringt.

Als Transportmittel für die zu perforierenden Zigaretten oder anderen stabförmigen Rauchartikel werden in der Regel Rolltrommeln u.dgl. verwendet. Diese Transportmittel fördern die Zigaretten queraxial durch den Auftreffpunkt des Strahls hindurch. Um eine Perforation nicht nur an einer Stelle auf der Umfangsoberfläche der Zigarette und somit im Hüllmaterial zu erzielen, sondern um die Perforierung zumindest über einen Teilumfang zu erhalten, wird die Zigarette, während sie queraxial vom Transportmittel befördert wird, zumeist mit Hilfe von Rollmitteln gerollt, die die Zigarette zumeist von der dem Transportmittel gegenüberliegenden Seite erfassen.

Während die Zigarette von den Rollmitteln um ihre Längsachse gerollt wird, wird sie gleichzeitig vom Transportmittel in Queraxialrichtung weiter befördert. Dabei entspricht bei jeder vollen Rollung bzw. Umdrehung der Zigarette bzw. des stabförmigen Rauchartikels dessen queraxialer Transportweg im wesentlichen einer Umfangslänge der Zigarette bzw. des stabförmigen Rauchartikels. Deshalb ist eine Einrichtung notwendig, die den Strahl entsprechend nachführt.

Hierzu ist der eingangs erwähnte Drehkörper vorgesehen, der um eine Drehachse rotierend gelagert ist. Gedreht wird der Drehkörper gewöhnlich durch eine hierfür vorgesehene Antriebseinrichtung. Der Drehkörper weist eine Reflexionsfläche auf, die einen von einer Strahlquelle erzeugten energiereichen Strahl, gewöhnlich ein Laserstrahl, während der Rotation des Drehkörpers reflektiert. Der reflektierte Strahl wird auf das Hüllmaterial fokussiert, um dort dann die gewünschten Perforationszonen zu erzeugen. Die Reflexionsfläche dient als Spiegel und ist so ausgebildet, dass bei Rotation des Drehkörpers der reflektierte Strahl wandert und somit dessen Auftreffpunkt eine Bahn beschreibt. Auf diese Weise ist es möglich, den Strahl während des queraxialen Transportes der Zigarette entsprechend nachzuführen.

An dieser Stelle sei noch angemerkt, dass die Lichtquelle den energiereichen Strahl gewöhnlich moduliert, insbesondere in gepulster Form erzeugt, um in den Perforationszonen diskrete Löcher in einer oder mehreren Reihen einzubringen. Durch die Einstellung der Pulsfolgen lassen sich auf diese Weise sehr viele unterschiedliche Perforationsmuster und insbesondere eine unterschiedliche Teilung der jeweiligen Lochreihe realisieren.

Die US 4,349,719 A offenbart eine Vorrichtung der eingangs genannten Art, bei welcher der Drehkörper eine Kegelform besitzt und die Reflexionsfläche in Abschnitte unterteilt ist, die konkav ausgebildet und in einem Kreis nebeneinanderliegend auf der Mantelfläche des kegelförmigen Drehkörpers angeordnet sind. Eine solche Konstruktion lässt sich jedoch kinematisch nur sehr schwer beherrschen.

Eine ähnliche Konstruktion für den Drehkörper zeigt die US 4,720,619 A.

Aus der GB 1 602 133 A ist es bekannt, einen zylindrischen Drehkörper vorzusehen, entlang dessen Zylindermantel nebeneinanderliegend Reflexionsflächen angeordnet sind.

Die EP 1 018 392 A2 beschreibt eine Perforationsvorrichtung zum Herstellen von Öffnungen in einer Umfangsfläche insbesondere einer Zigarette. Diese bekannte Perforationsvorrichtung weist eine Lichtquelle zum Erzeugen mindestens eines energiereichen Lichtstrahles, mit dessen Hilfe die Perforationen in das Hüllmaterial einer Zigarette einbringbar sind, ein Nachführmittel zum Nachführen des Lichtstrahles, eine durch das Nachführmittel erzeugbare Wirkzone, innerhalb derer der Lichtstrahl zum Einbringen der Perforationen auf eine sich durch die Wirkzone bewegende Zigarette einwirkt, Rollmittel zum Erzeugen einer Eigenrotationsbewegung der Zigaretten um ihre Längsachse, während sie sich durch die Wirkzone bewegen, um die Umfangsoberfläche dem Lichtstrahl auszusetzen, und Transportmittel zum Transport der Zigaretten durch die Wirkzone auf. Das Nachführmittel besteht aus mindestens einem Schwenkspiegel. Vor Erreichen der Wirkzone wird der Lichtstrahl außerdem noch durch ein Lichtbrechungsmittel hindurchgeführt, so dass beim Nachführen des Lichtstrahles dieser im wesentlichen überall innerhalb der Wirkzone auf der Umfangsfläche fokussiert bleibt. Demnach ist diese bekannte Vorrichtung in der Lage, während des queraxialen Transportes der Zigarette den Strahl entsprechend nachzuführen, um in Umfangsrichtung verteilt Perforationen zu erzeugen.

Die DE 40 38 928 A1 offenbart eine Vorrichtung zum Perforieren von Zigaretten, welche einen Drehkörper mit abgestufter Stirnfläche aufweist. Die Stufen bzw. stufenförmigen Abschnitte der Stirnfläche sind parallel zueinander angeordnet und stellen Ablenkspiegel für einen Laserstrahl zur Perforation von Zigaretten dar. Der in einem Winkel zur Drehachse des Drehkörpers auf dessen Stirnfläche einfallende Laserstrahl wird durch die Stufen der Stirnfläche abwechselnd auf verschiedene Wege abgelenkt, die zueinander parallel versetzt sind. Auf diese Weise wird eine Anzahl von Perforationen entsprechend der Anzahl der Stufen in der Stirnfläche des Drehkörpers erzeugt. Allerdings ist diese bekannte Vorrichtung lediglich dazu geeignet, im Hüllmaterial einer Zigarette Perforationen zu erzeugen, die in axialer Richtung der Zigarette voneinander beabstandet sind. Demgegenüber ist diese bekannte Vorrichtung nicht in der Lage, während des queraxialen Transportes der Zigarette oder eines sonstigen stabförmigen Gegenstandes den Strahl entsprechend nachzuführen, um in Umfangsrichtung verteilt Perforationen zu erzeugen.

Aus der DE 195 11 393 A1 ist ein Gerät zum Perforieren von Zigarettenpapierbahnen bekannt, welches ebenfalls einen Drehkörper aufweist. Der Drehkörper dieser bekannten Vorrichtung besteht aus einem Polygonspiegel, durch den bei Rotation ein Laserstrahl zyklisch durch einen bestimmten Winkelbereich geschwenkt wird. Im Strahlengang des von diesem Polygonspiegel abgelenkten Laserstrahls ist eine Reihe von nebeneinander liegenden optischen Elementen angeordnet, von denen jedes optische Element den Laserstrahl auf eine bestimmte Stelle des Hüllmaterials zur Ausbildung von Perforationen fokussiert. Auf diese Weise werden entsprechend der Anzahl der optischen Elemente nebeneinander liegende Perforationszonen in der Zigarettenpapierbahn erzeugt. Bei dieser bekannten Vorrichtung wird die Zigarettenpapierbahn perforiert, bevor sie um den Tabakstrang gewickelt wird. Hierzu liegt die Zigarettenpapierbahn ausgebreitet auf einem ebenen Untergrund. Um nebeneinander liegende Perforationsspuren ausbilden zu können, muss außerdem die Zigarettenpapierbahn entsprechend bewegt werden. Demnach ist diese Vorrichtung weder dazu vorgesehen, noch in der Lage, bereits umhüllte Zigaretten während ihres Quertransportes so zu perforieren, dass Perforationen in Umfangsrichtung im Hüllmaterial ausgebildet werden.

Mit Hilfe der zuvor angegebenen bekannten Vorrichtungen lassen sich zwar Perforationslöcher an vorbestimmten Stellen diskret erzeugen; jedoch erlauben diese bekannten Vorrichtungen keine kontinuierliche Nachführung des fokussierten Strahls, insbesondere um während einer queraxialen Bewegung des stabförmigen Gegenstandes eine Perforationszone in Umfangsrichtung des stabförmigen Gegenstandes in dessen Hüllmaterial einzubringen.

Es ist daher Aufgabe der Erfindung, eine Vorrichtung der eingangs genannten Art derart zu verbessern, dass mit Hilfe einer einfachen Kinematik eine kontinuierliche Bewegung des Strahls realisierbar ist.

Diese Aufgabe wird erfindungsgemäß gelöst durch eine Vorrichtung zum Herstellen von Zonen gewünschter Luftdurchlässigkeit im Hüllmaterial stabförmiger Gegenstände insbesondere der Tabak verarbeitenden Industrie, mit einem um eine Drehachse drehbar gelagerten Drehkörper mit mindestens einer Reflexionsfläche zur Reflexion eines energiereichen Strahls während der Rotation des Drehkörpers zur Erzeugung von Perforationszonen auf dem Hüllmaterial, wobei die Reflexionsfläche mindestens einen Abschnitt aufweist, der einen derart gebogenen oder gekrümmten Verlauf hat, dass bei Rotation des Drehkörpers der von diesem Abschnitt reflektierte Strahl wandert, dadurch gekennzeichnet, dass der gekrümmte Abschnitt der Reflexionsfläche schraubenförmig verläuft.

Bei Rotation des Drehkörpers bewirkt der schraubenförmig gebogene oder gekrümmte Verlauf des Reflexionsflächenabschnitts eine kontinuierliche Verschiebung des daran reflektierten Strahls. Mit Hilfe der Erfindung wird daher eine einfache Kinematik realisiert, die in effektiver Weise eine Nachführung des Strahls ermöglicht, welche kontinuierlich stattfindet. Somit lässt sich die Erfindung insbesondere auch zur Herstellung von Perforationszonen in Umfangsrichtung auf dem Hüllmaterial von stabförmigen Gegenständen wie beispielsweise Zigaretten verwenden, wenn diese gleichzeitig eine queraxiale Bewegung ausführen.

Demgegenüber geben die US 4,349,719 A und US 4,720,619 A keine Anregung, alternativ zu der dort jeweils offenbarten konisch umlaufenden Anordnung der Reflexionsflächenabschnitte auch eine schraubenförmige Ausbildung am Drehkörper vorzusehen. Gleiches gilt auch für die GB 1 602 133 A, die ebenfalls keinerlei Anregungen gibt, anstelle einer nebeneinanderliegenden Anordnung entlang des Zylindermantels des Drehkörpers die Reflexionsflächen alternativ schraubenförmig auszubilden. Noch ferner als jener Stand der Technik stehen die übrigen hier erwähnten Vorveröffentlichungen.

Wird die Erfindung insbesondere zur Herstellung von Perforationszonen in Umfangsrichtung auf dem Hüllmaterial von sich gleichzeitig queraxial bewegenden stabförmigen Gegenständen verwendet, sollte die gesamte Anordnung so getroffen sein, dass während eines Arbeitstaktes der Strahl entlang eines Fokuswegs nachgeführt wird, der der Länge des Umfangs des stabförmigen Gegenstands entspricht, also der Drehkörper um den Rotationswinkel zwischen Anfangspunkt und Endpunkt des gekrümmten Reflexionsflächenabschnitts gedreht und gleichzeitig der zu bestrahlende stabförmige Gegenstand um 360° queraxial gerollt wird.

Zweckmäßigerweise ist der gekrümmte Abschnitt der Reflexionsfläche streifenförmig ausgebildet.

Bei einer gegenwärtig besonders bevorzugten Ausführung sollte die Schraubenachse sich parallel zur Drehachse des Drehkörpers erstrecken und bevorzugt mit dieser zusammenfallen. Ferner sollte die Schraubenachse sich parallel zur Einfallsrichtung des Strahls erstrecken und die Steigung der Schraubenform des Reflexionsflächenabschnitts konstant sein. Durch Rotation des Drehkörpers und somit des schraubenförmigen Reflexionsflächenabschnitts um die parallel zur Einfallsrichtung des Strahls verlaufende Schraubenachse wird der Strahl so abgelenkt, als ob er unter einem Winkel auf eine ebene Spiegelfläche trifft, die in Richtung ihrer Normalen verschoben wird. Im Gegensatz zu einer solchen Spiegelanordnung ist die erfindungsgemäße Konstruktion jedoch kinematisch wesentlich einfacher zu beherrschen.

Vorzugsweise sollte der Drehkörper die Form eines Zylinders haben, dessen Zylinderachse die Drehachse ist und um dessen Mantel herum die Reflexionsfläche ausgebildet ist.

Ferner sollte die Reflexionsfläche winklig zur Stirnfläche des Drehkörpers ausgerichtet sein.

Die Reflexionsfläche kann einen einzigen erfindungsgemäß gebogenen oder gekrümmten Abschnitt oder eine Mehrzahl von kontinuierlich zusammenhängenden derartigen Abschnitten aufweisen bzw. aus solchen gebildet sein.

Bei einer alternativen Ausführung kann die Reflexionsfläche aber auch eine bestimmte Anzahl von gekrümmten Abschnitten aufweisen, die voneinander getrennt angeordnet sind. Dabei können zwischen den einzelnen gekrümmten Abschnitten Sprünge oder Unstetigkeiten vorhanden sein. Ferner können die einzelnen gekrümmten Abschnitte der Reflexionsfläche in Richtung des Umfangs des Drehkörpers voneinander beabstandet sein, wobei vorzugsweise die Anfangsbereiche der gekrümmten Abschnitte auf einer ersten Ebene und die Endbereiche der gekrümmten Abschnitte auf einer zweiten Ebene liegen können, wobei die beiden Ebenen winklig, vorzugsweise im wesentlichen quer zur Drehachse des Drehkörpers, und parallel zueinander verlaufen und voneinander beabstandet sind. Zweckmäßigerweise sollten die gekrümmten Abschnitte der Reflexionsfläche über den Umfang des Drehkörpers im wesentlichen gleichmäßig verteilt angeordnet sein. Demnach kann die Reflexionsfläche mit mehreren Teilkurven bzw. Teilflächen ausgeführt sein, wobei nach einem definierten Drehwinkel des Drehkörpers um seine Drehachse bei fortgesetzter Rotation ein automatischer Rücksprung des einfallenden Strahles vom Endpunkt des vorangegangenen Reflexionsflächenabschnitts bzw. der vorangegangenen Teilfläche auf den Anfangspunkt des nächstfolgenden Reflexionsflächenabschnitts bzw. der nächstfolgenden Teilfläche stattfindet. Der Rotationswinkel des Drehkörpers zwischen Anfangs- und Endpunkt des gebogenen oder gekrümmten Abschnitts entspricht demnach dem während der Rotation des Drehkörpers um diesen Rotationswinkel abzubildenden Fokusweg des Strahls. Um diesen Rotationswinkel sollte der Drehkörper während eines Arbeitstaktes gedreht werden.

Vorzugsweise sollten die gekrümmten Abschnitte hinsichtlich Form, Verlauf, Richtung und/oder Steigung im wesentlichen übereinstimmen, so dass die Reflexionsfläche mehrere gleichartige Teilflächen aufweisen kann.

Schließlich kann zweckmäßigerweise der oder jeder gekrümmte Abschnitt der Reflexionsfläche eine Steigung von etwa 45° gegenüber der Drehachse des Drehkörpers aufweisen. Ein solcher Steigungswinkel hat sich besonders effektiv herausgestellt.

Nachfolgend wird ein bevorzugtes Ausführungsbeispiel der Erfindung anhand der beiliegenden Zeichnungen näher erläutert. Es zeigen:
- Figur 1: eine schematische Darstellung einer Filteransetzmaschine der Anmelderin;
- Figur 2: in schematischer Seitenansicht die Anordnung eines Drehspiegels, der Teil einer in der Filteransetzmaschine von Figur 1 verwendeten Perforationsvorrichtung ist;
- Figur 3: eine schematische Darstellung einer ersten bevorzugten Ausführung einer in der Filteransetzmaschine von Figur 1 verwendeten Perforationsvorrichtung (a), Querschnittsansichten des Strahlenganges an zwei verschiedenen Stellen der Vorrichtung (b und c) sowie eine Querschnittsansicht einer in dieser Vorrichtung verwendeten Teilzylinderlinse;
- Figur 4: den wesentlichen Teil einer zweiten bevorzugten Ausführung einer in der Filteransetzmaschine von Figur 1 verwendeten Perforationsvorrichtung in schematischer Stirnansicht (a) und in schematischer Seitenansicht (b); und
- Figur 5: eine ausschnittsweise Vergrößerung des Hüllmaterialabschnitts mit darauf erzeugten Perforationsreihen.

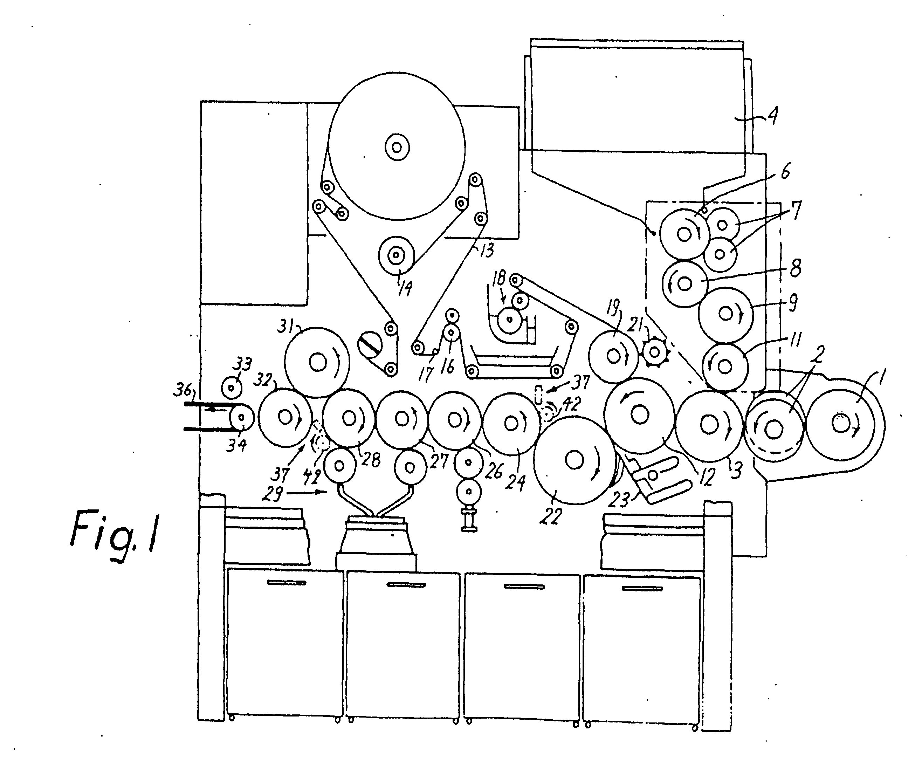

Die Filteransetzmaschine gemäß Figur 1 ist an sich bekannt und wird im Folgenden zum allgemeinen Verständnis nur kurz bezüglich Aufbau und Wirkungsweise beschrieben.

Eine Einlauftrommel 1 übergibt die auf einer Zigarettenherstellungsmaschine produzierten Zigaretten an zwei Staffeltrommeln 2, welche die gestaffelt zugeführten Zigaretten entstaffeln und in Reihen zu je zwei Stück mit einem Zwischenraum zwischen den Zigaretten an eine Zusammenstelltrommel 3 abgeben. Die Filterstäbe gelangen aus einem Magazin 4 auf eine Schneidtrommel 6, werden von zwei Kreismessem 7 zu Filterstopfen doppelter Gebrauchslänge geschnitten, auf einer Staffeltrommel 8 gestaffelt, von einer Schiebetrommel 9 zu einer Reihe hintereinander liegender Stopfen ausgerichtet und von einer Beschleunigertrommel 11 in die Zwischenräume der Zigarettenreihen auf der Zusammenstelltrommel 3 abgelegt.

Die so gebildeten Zigarette-Filter-Zigarette-Gruppen werden zusammengeschoben, so dass sie axial dicht an dicht liegen. Anschließend werden sie von einer Übergabetrommel 12 übernommen. Ein Belagpapierstreifen 13 wird von einer Belagpapierbobine 14 mittels einer Zuführanordnung in Form einer Abzugwalze 16 abgezogen. Der Belagpapierstreifen 13 wird um einen eine scharfe Kante aufweisenden Vorbrecher 17 herumgelenkt, von einer Beleimvorrichtung 18 beleimt und auf einer Belagwalze 19 von einer Messertrommel 21 geschnitten. Die geschnittenen Belagblättchen werden an die Zigaretten-Filter-Gruppen auf der Übergabetrommel 12 angeheftet und auf einer Rolltrommel 22 mittels einer Rollhand 23 um die Zigaretten-Filter-Gruppen herumgerollt.

Die so hergestellten und nun fertigen Doppel-Filter-Zigaretten-Gruppen werden über eine Trockentrommel 24 einer Schneidtrommel 26 zugeführt und auf dieser durch mittiges Schneiden durch die Filterstopfen hindurch zu Einzelfilterzigaretten konfektioniert, wobei gleichzeitig fehlerhafte Filterzigaretten ausgeworfen werden. Eine mit einer Übergabetrommel 27 und einer Sammeltrommel 28 zusammenwirkende Wendeeinrichtung 29 wendet eine Filterzigarettenreihe und überführt sie gleichzeitig in die über die Übergabetrommel 27 und die Sammeltrommel 28 durchlaufende ungewendete Filterzigarettenreihe. Über eine Prüftrommel 31 gelangen die Filterzigaretten zu einer Auswerftrommel 32, auf der vor dem Auswerfvorgang außerdem die Kopfabtastung der Filterzigaretten erfolgt.

Eine mit einer Bremstrommel 33 zusammenwirkende Ablegertrommel 34 legt die Filterzigaretten auf ein Ablegerband 36.

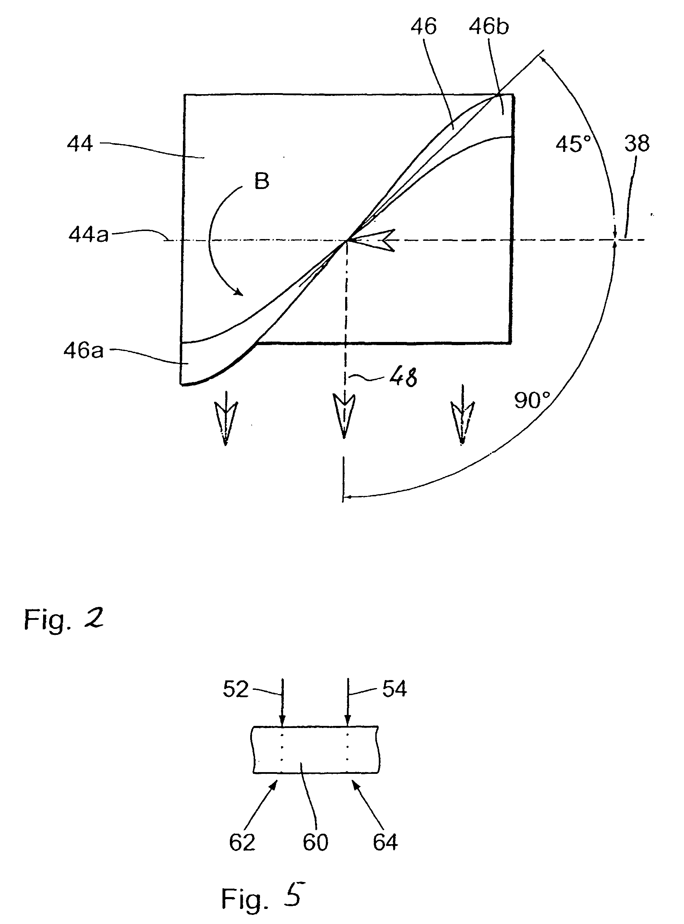

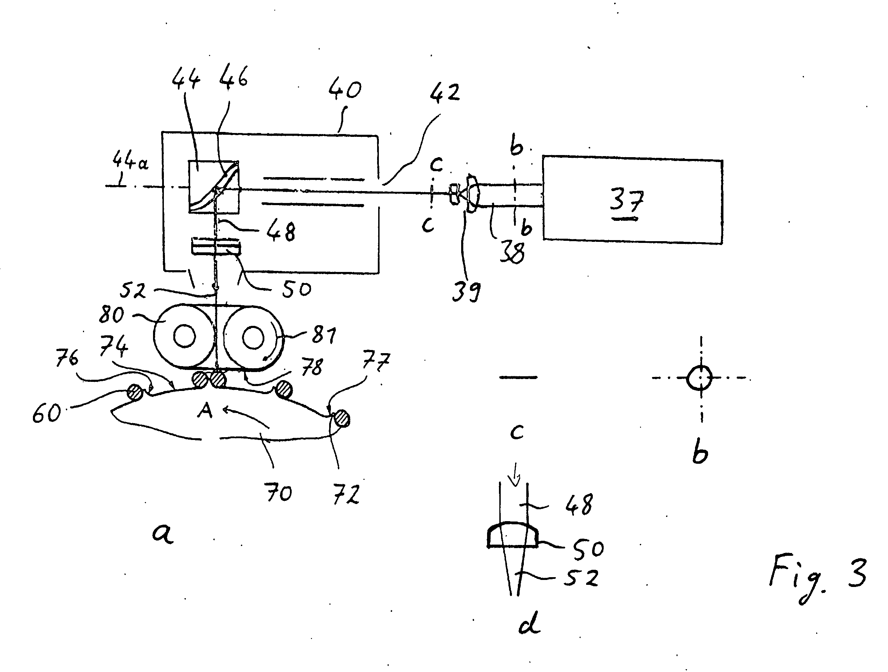

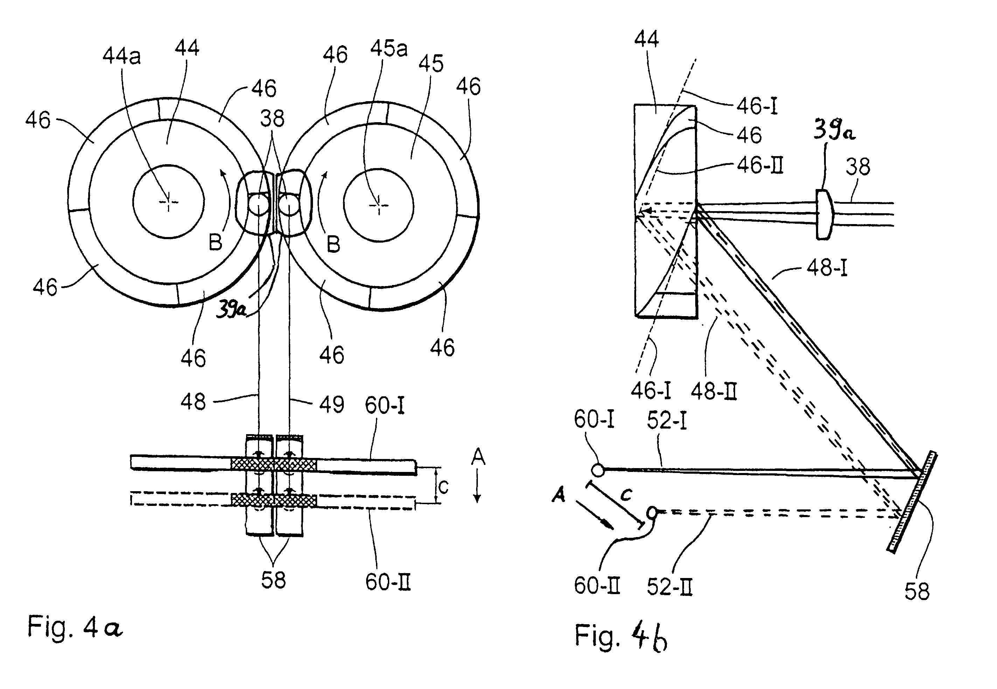

Der Filteransetzmaschine ist ein Laserkopf 37 im Bereich eines Querförderers, im vorliegenden Fall der Trockentrommel 24 oder der Sammeltrommel 28, zugeordnet. Der Laserkopf 37 ist Teil einer optischen Perforationsvorrichtung, wie sie weiter unten anhand der Figuren 3 und 4 in zwei verschiedenen bevorzugten Ausführungen beschrieben wird, und dient als Strahlenquelle zur Erzeugung und Abgabe eines Laserstrahles. Einen wesentlichen Bestandteil der optischen Perforationsvorrichtung bildet ein zylindrischer Drehspiegel 44, wie er in Figur 2 gezeigt ist. Der zylindrische Drehspiegel 44 ist um seine Zylinderachse 44a drehbar gelagert. In Drehung versetzt wird der Drehspiegel 44 von einer nicht dargestellten Antriebseinrichtung. Während des Betriebes dreht sich der Drehspiegel 44 mit konstanter Geschwindigkeit. Der vom Laserkopf 37 (Figur 1) erzeugte Laserstrahl 38, in Figur 2 nur durch seine Strahlenachse als gestrichelte Linie schematisch angedeutet ist, trifft in Richtung der Zylinderachse 44a auf den Drehspiegel 44. Der Drehspiegel 44 weist streifenförmige Reflexionsabschnitte 46 auf, an denen der einfallende Laserstrahl 38 reflektiert wird. Der reflektierte Strahl 48, der in Figur 2 ebenfalls nur durch seine Strahlenachse als gestrichelte Linie schematisch angedeutet ist, verlässt den Drehspiegel 44 rechtwinkelig zur Zylinderachse 44a und somit in radialer Richtung.

In Figur 2 besonders gut erkennbar ist die Ausbildung und der Verlauf eines streifenförmigen Reflexionsabschnitts 46. Der streifenförmige Reflexionsabschnitt 46 bildet eine schraubenförmige bzw. teilschraubenförmige Spiegelfläche, wobei die Schraubenachse mit der Zylinder- bzw. Drehachse 44a des Drehspiegels 44 zusammenfällt. Ferner ist im dargestellten Ausführungsbeispiel die streifenförmige Reflexionsfläche 46 rechtwinklig zur Manteloberfläche des zylindrischen Körpers des Drehspiegels 44 ausgerichtet.

Wie Figur 2 ferner erkennen lässt, verläuft im dargestellten Ausführungsbeispiel die Einfallsrichtung des einfallenden Laserstrahls 38 parallel zur Drehachse 44a des Drehspiegels 44. Da der Laserkopf 37 stationär angeordnet ist, ist auch der Strahlengang des einfallenden Laserstrahls 38 stationär. Auf jeden Fall muss der Strahlengang des einfallenden Laserstrahls 38 so ausgerichtet sein, dass der einfallende Laserstrahl 38 auf die schraubenförmige Spiegelfläche 46 trifft und dabei so abgelenkt wird, dass der reflektierte Strahl 48 entsteht.

Die - zweckmäßigerweise konstante - schraubenförmige Steigung des streifenförmigen Reflexionsabschnitts 46 bzw. der Spiegelfläche hat zur Folge, dass bei Rotation des Drehspiegels 44 in Drehrichtung des Pfeils B der reflektierte Strahl 48 vom Anfang 46a bis zum Ende 46b des streifenförmigen Reflexionsabschnitts 46 quer zu seiner Strahlenachse über eine bestimmte Distanz wandert. Diese Distanz entspricht dabei einer einfachen Umfangslänge einer Zigarette, deren Hüllmaterial bzw. Belagpapier durch den Strahl entsprechend perforiert werden soll.

Demnach muss die Rotation des Drehspiegels 44 mit der Rollbewegung der Zigarette so abgestimmt sein, dass die Zigarette um 360° gedreht wird, während gleichzeitig der Drehspiegel 44 um einen Rotationswinkel gedreht wird, der dem Winkelabstand zwischen dem Anfang 46a und dem Ende 46b des streifenförmigen Reflexionsabschnitts 46 entspricht.

Im dargestellten Ausführungsbeispiel beträgt die Steigung des streifenförmigen Reflexionsabschnitts 46 45° und der Reflexionswinkel zwischen einfallendem Laserstrahl 38 und reflektiertem Strahl 48 90°. Grundsätzlich sind aber auch andere Winkelanordnungen denkbar.

Der Drehspiegel 44 kann mit einem einzigen streifenförmigen Reflexionsabschnitt 46 der anhand von Figur 2 besprochenen Art oder auch mit einer Mehrzahl solcher streifenförmigen Reflexionsabschnitte 46 ausgeführt sein. In Figur 3a ist eine erste bevorzugte Ausführung der erwähnten optischen Perforationsvorrichtung gezeigt. Der aus dem Laserkopf 37 austretende Laserstrahl 38 besitzt, im Querschnitt betrachtet, etwa eine Kreisform; dies ist in Figur 3b schematisch dargestellt, die einen Querschnitt durch den Laserstrahl 38 entlang der strichpunktierten Linie b-b von Figur 3a zeigt. Durch eine dem Laserkopf 37 nachgeschaltete Linsenoptik 39 wird der im Querschnitt kreisförmige Laserstrahl 38 in der Ausführung von Figur 3 in einen sogenannten Flächenstrahl umgewandelt, der im Querschnitt etwa die Form eines Striches hat; dies ist in Figur 3c angedeutet, welche den Querschnitt durch den Laserstrahl 38 an einer Stelle gemäß der strichpunktierten Linie c-c von Figur 3a hinter der Linsenoptik 39 schematisch zeigt. Die in Figur 3 dargestellte Ausführung der optischen Perforationsvorrichtung weist ein einen Umlenkkopf bildendes Gehäuse 40 auf, durch dessen dem Laserkopf 37 zugewandte Öffnung 42 der von der Linsenoptik 39 umgewandelte Laserstrahl 38 in das Gehäuse 40 tritt. Innerhalb des Gehäuses 40 trifft der Laserstrahl 38 auf den dort angeordneten zylindrischen Drehspiegel 44, der bereits zuvor anhand von Figur 2 im einzelnen beschrieben worden ist.

Anstelle der in Figur 3 diskret dargestellten Linsenoptik 39 ist es auch denkbar, den Laserkopf 37 so auszubilden, dass bereits dort ein im Querschnitt strichförmiger Laserstrahl erzeugt wird. Hierzu kann beispielsweise die Linsenoptik 39 im Laserkopf 37 angeordnet sein.

Der an dem streifenförmigen Reflektionsabschnitten 46 des Drehspiegels 44 reflektierte Strahl 48 wird durch eine Teilzylinderlinse 50 geleitet, die mit ihrer Achse quer zum Strahlengang des reflektierten Strahls 48 angeordnet ist. In Figur 3d ist die Teilzylinderlinse 50 im Querschnitt gezeigt. Durch die Teilzylinderlinse 50 wird der im Querschnitt strichförmige Strahl 48 in einen konvergierenden Strahl umgewandelt, der als fokussierter Strahl 52 auf den Umfang einer bereits mit Belagpapier versehenen Zigarette 60 gerichtet ist, wo der fokussierte Strahl 52 an seinem Auftreffpunkt auf dem Belagpapier eine in Umfangsrichtung verlaufende Perforationszone erzeugt.

Während der Bestrahlung durch den fokussierten Strahl 52 wird die Zigarette in queraxialer Richtung bewegt und dabei gleichzeitig um ihre Längsachse gedreht. Hierzu ist eine drehbar gelagerte Rolltrommel 70 vorgesehen, die in Figur 3a nur abschnittsweise dargestellt ist. Bei dieser Rolltrommel 70 kann es sich um die Trockentrommel 24 oder die Sammeltrommel 28 der in Figur 1 gezeigten Filteransetzmaschine handeln. Die Rolltrommel 70 weist entlang ihres Umfanges eine Reihe von Erhebungen 72 in äquidistanter Anordnung auf, wobei der Bereich zwischen jeweils zwei Erhebungen 72 als sogenannter Rollabschnitt 74 ausgebildet ist. Jeder Rollabschnitt 74 wird somit von einer ersten Flanke 76 der einen Erhebung 72 und von einer zweiten Flanke 77 der anderen Erhebung 72 begrenzt und hat, im Längsschnitt oder in Drehrichtung A der Rolltrommel 70 betrachtet, die Form einer Wanne. Jeder Rollabschnitt 74 nimmt eine Zigarette auf, von denen in Figur 3a aus Gründen der besseren Übersichtlichkeit nur die links dargestellte Zigarette mit dem Bezugszeichen "60" gekennzeichnet ist. Im Bereich der Bestrahlung durch den fokussierten Strahl 52 wird die Zigarette 60 im Rollabschnitt 74 entlang der Umfangs- bzw. Drehrichtung A mit Hilfe eines Gegenrollbandes 78 gerollt, welches die Zigarette 60 berührt. Beim Gegenrollband 78 handelt es sich um ein Endlosband, das um zwei parallele Walzen 80, 81 umläuft. Somit bildet der Rollabschnitt 74 eine Rollfläche und das Gegenrollband 78 eine Gegenrollfläche für den queraxialen Transport der Zigaretten 60, wobei die queraxiale Transportrichtung der Drehrichtung A entspricht.

Im ersten dargestellten Ausführungsbeispiel von Figur 3a werden die Zigaretten 60 an den jeweiligen Flanken 76, 77 der Erhebungen 72 mit Hilfe von nicht näher dargestellten Saugöffnungen oder dergleichen gehalten, und zwar vor Berührung mit dem Gegenrollband 78 jeweils an der vorlaufenden ersten Flanke 76 und nach Trennung von dem Gegenrollband 78 an der nachlaufenden zweiten Flanke 77. Dabei bremst das Gegenrollband 24 im dargestellten Ausführungsbeispiel die an der vorlaufenden ersten Flanke 76 liegende Zigarette 60 ab, so dass diese über den Rollabschnitt 74 relativ zur Rolltrommel 70 zurückrollt, so dass sie schließlich an der nachlaufenden zweiten Flanke 77 zu liegen kommt. Somit ist gemäß der in Figur 3a dargestellten Ausführungsform die Umfangsgeschwindigkeit der Rolltrommel 70 höher als die Fördergeschwindigkeit des Gegenrollbandes 78 gewählt. In Figur 3a ist beispielhaft diejenige Zigarette, die vom fokussierten Strahl 52 bestrahlt wird in einer Stellung an der vorlaufenden ersten Flanke 76 dargestellt. Gewöhnlich oder zumindest häufig kann sich die vom fokussierten Strahl 52 bestrahlte Zigarette in der in Figur 3a gezeigten Stellung auch bereits zwischen den beiden Flanken 76 und 77 und insbesondere etwa in der Mitte des Rollabschnittes 74 befinden.

Es sind aber auch andere Anordnungen und andere Fördergeschwindigkeiten denkbar. Entscheidend ist lediglich, dass sich die Zigarette 60 um 360° um ihre Längsachse dreht, solange sie vom fokussierten Strahl 52 bestrahlt wird. Beispielsweise ist es auch möglich, anstelle des umlaufenden endlosen Gegenrollbandes 78 eine feste Gegenrollfläche vorzusehen, was insbesondere dann von Vorteil ist, wenn die Platzverhältnisse beengt sind.

An dieser Stelle sei angemerkt, dass es alternativ auch denkbar ist, die Linsenoptik 39 so auszubilden, dass der vom Laserkopf 37 erzeugte, im Querschnitt kreisförmige Laserstrahl 38 in einen im Querschnitt punktförmigen Laserstrahl umgewandelt wird, wodurch dann die Teilzylinderlinse 50 entfallen kann. In diesem Zusammenhang sei ferner erwähnt, dass stattdessen auch der Laserkopf 37 so ausgebildet sein kann, dass dort bereits ein im Querschnitt punktförmiger Laserstrahl erzeugt wird. Allerdings erfordern diese Modifikationen einen verhältnismäßig hohen konstruktiven Aufwand.

Die optische Perforationsvorrichtung kann in einer zweiten bevorzugten Ausführung so ausgestaltet sein, dass der vom Laserkopf 37 erzeugte Laserstrahl 38 in einen konvergierenden Strahl umgewandelt wird. Eine solche Ausführung ist mit ihren wesentlichen Bestandteilen, durch die sie sich von der ersten Ausführung gemäß Figur 3 unterscheidet, schematisch in Figur 4 dargestellt.

Diese zweite bevorzugte Ausführung weist neben einem ersten Drehspiegel 44 einen zweiten Drehspiegel 45 auf. Dabei ist die Darstellung von Figur 4a gegenüber den Darstellungen der Figur 2 und 3a um 90° gedreht und verlaufen die Drehachsen 44a und 45a der Drehspiegel 44 und 45 sowie der Strahlengang des einfallenden Laserstrahls 38 rechtwinklig zur Bildebene von Figur 4a, während Figur 4b eine Seitenansicht der zweiten Ausführung hinsichtlich der Blickrichtung entsprechend den Darstellungen der Figuren 2 und 3a zeigt.

Die in Figur 4 dargestellte zweite Ausführung unterscheidet sich ferner von der ersten Ausführung gemäß Figur 3 dadurch, dass anstelle der Linsenoptik 39 von Figur 3 eine einfache Sammellinsenanordnung 39a zwischen dem (in Figur 4 nicht dargestellten) Laserkopf 37 und den Drehspiegeln 44 und 45 angeordnet ist. Wegen der Anordnung von zwei Drehspiegeln 44 und 45 müssen der Laserkopf 37 und die Sammellinsenanordnung 39a so ausgebildet sein, dass zwei parallel zueinander verlaufende Laserstrahlen 38 erzeugt werden, wie Figur 4a schematisch erkennen lässt. Hierzu ist die Sammellinsenanordnung 39a gewöhnlich so ausgestaltet, dass sie aus zwei nebeneinanderliegenden Linsenabschnitten besteht, wie in Figur 4a ferner angedeutet ist. Die Brennweite der Sammellinsenanordnung 39a ist so bemessen, dass der Brennpunkt im gesamten Strahlengang deutlich hinter dem Drehspiegel 44 liegt, und zwar an einer Stelle, wo der konvergierende Laserstrahl auf den Umfang einer bereits mit Belagpapier versehenen Zigarette 40 trifft.

Durch die Sammellinsenanordnung 39a wird der Laserstrahl 38 somit in einen konvergierenden Laserstrahl umgewandelt. Alternativ ist es aber bei dieser zweiten Ausführung auch denkbar, den Laserkopf 37 bereits so vorzusehen, dass er einen konvergierenden Laserstrahl erzeugt. Hierzu könnte beispielsweise die Sammellinsenanordnung 39a direkt im Laserkopf 37 untergebracht werden. Ferner sei an dieser Stelle erwähnt, dass die zweite Ausführung gemäß Figur 4 selbstverständlich auch in gleicher Weise wie die erste Ausführung gemäß Figur 3 mit einem einen Umlenkkopf bildenden Gehäuse versehen sein kann, welches jedoch in Figur 4 nicht dargestellt ist.

Die beiden Drehspiegel 44, 45 sind im dargestellten zweiten Ausführungsbeispiel gemäß Figur 4a spiegelsymmetrisch zueinander ausgebildet und angeordnet, wobei die senkrecht zur Bildebene von Figur 4a einfallenden Laserstrahlen 38 stets an den gegenüberliegenden streifenförmigen Reflexionsabschnitten 46 reflektiert werden, so dass der reflektierte Strahl einen Doppelstrahl bildet, der aus den beiden reflektierten Strahlen 48 und 49 besteht. Diese beiden Strahlen 48 und 49 werden an Umlenkspiegeln 58 reflektiert, wo sie dann als fokussierte Strahlen 52, 54 in Richtung auf die zu bestrahlende Zigarette 60 austreten, wie Figur 4 und 5 erkennen lassen.

Bei der durch die zweite Ausführung der optischen Perforationsvorrichtung gemäß Figur 4 zu perforierenden Zigarette 60 handelt es sich um eine Doppelzigarette, was nachfolgend noch näher erläutert wird. Die in durchgezogenen Linien dargestellte Doppelzigarette, die mit dem Bezugszeichen 60-I bezeichnet ist, befindet sich in der Darstellung von Figur 4 am Anfang eines den Fokusweg der fokussierten Strahlen 52, 54 entsprechenden Transportweges mit einer Distanz C, während die in gestrichelten Linien dargestellte Doppelzigarette mit dem Bezugszeichen 60-II am Ende dieses Transportwegs dargestellt ist. Die queraxiale Bewegung der Zigarette 60 während der Perforierung findet im dargestellten Ausführungsbeispiel winklig zum Strahlengang der fokussierten Strahlen 52, 54 statt, wie Figur 4b gut erkennen lässt. Denn bei Verschiebung des Strahls durch Rotation des Drehspiegels 44 verläuft die Flugbahn des Brennpunktes nicht senkrecht zur Strahlenachse der fokussierten Strahlen 52, 54, da durch Reflexion an den teilschraubenförmig verlaufenden, streifenförmigen Reflektionsabschnitten 46 der Drehspiegel 44, 45 die Länge der reflektierten Strahlen 48, 49 und der fokussierten Strahlen 52, 54 entsprechend verändert wird.

Wie in Figur 4a schematisch erkennbar ist, ist im dargestellten Ausführungsbeispiel jeder Drehspiegel 44, 45 mit vier streifenförmigen Reflexionsabschnitten 46 versehen, von denen sich jeder streifenförmige Reflexionsabschnitt 46 über einen Viertelkreis erstreckt. Bei jedem Drehspiegel 44, 45 sind über den Umfang des Drehkörpers die vier streifenförmigen Reflexionsabschnitte 46 gleichmäßig verteilt und somit in einem Winkelabstand von 90° angeordnet. Die vier Reflexionsabschnitte 46 jedes Drehspiegels 44, 45 bilden Teilkurven, die hinsichtlich Form, Verlauf, Richtung und Steigung übereinstimmen. Dabei liegen die Anfangsbereiche 46a (Figur 2) der Reflexionsabschnitte 46 in einer ersten gedachte Ebene, die benachbart zur einen Stirnseite des Drehkörpers verläuft bzw. mit dieser zusammenfällt, und die Endbereiche 46b (Figur 2) der Reflexionsabschnitte 46 in einer zweiten gedachten Ebene, die benachbart zur gegenüberliegenden Stirnseite verläuft bzw. mit dieser zusammenfällt, wobei jene ersten und zweiten gedachten Ebenen sich rechtwinkelig zur Drehachse 44a bzw. 45a des jeweiligen Drehspiegels 44 bzw. 45 erstrecken.

In jedem Arbeitstakt wird jeder Drehspiegel 44, 45 um 90° gedreht, während die zu perforierende Zigarette unter Ausführung einer 360°-Drehung weiter gerollt und somit um die Distanz C in queraxialer Richtung gemäß Pfeil A transportiert wird. Im darauffolgenden Arbeitstakt wird eine nachfolgende Zigarette perforiert, während jeder Drehspiegel 44, 45 um weitere 90° gedreht wird. Demnach entspricht der Rotationswinkel der Drehspiegel 44, 45 je Arbeitstakt (90° im dargestellten Ausführungsbeispiel) dem in dieser Zeit abzubildenden Fokusweg des fokussierten Strahls 52 mit der Distanz C.

Nach Drehung der Drehspiegel 44, 45 um den einem Arbeitstakt entsprechenden Rotationswinkel erfolgt ein automatischer Rücksprung des einfallenden Laserstrahls 38 auf den Anfang 46a (Figur 2) des nächstfolgenden streifenförmigen Reflexionsabschnitts 46 auf jedem Drehspiegel 44, 45.

Da der einfallende Laserstrahl 38 eine gewisse Querschnittsfläche hat, ist der nutzbare Rotationswinkel je Arbeitstakt entsprechend ein wenig kleiner als der Winkelabstand zwischen jeweils benachbarten Reflexionsabschnitten 46. Deshalb wird der Strahldurchmesser des einfallenden Laserstrahls 38 durch die Sammellinsenanordnung 39a auf einen kleineren Durchmesser als den vom Laserkopf 37 erzeugten Rohstrahldurchmesser vorfokussiert, um die nutzbare Lasereinsatzzeit bzw. den nutzbaren Laserstrahlweg je Arbeitstakt zu optimieren.

An dieser Stelle ergänzend sei noch angemerkt, dass es sich bei dem hier erörterten Ausführungsbeispiel um eine sogenannte Doppelstrahlausführung handelt, um Doppelzigaretten zu perforieren. Wie bereits erwähnt, entstehen derartige Doppelzigaretten während der Herstellung, indem zwischen zwei axial fluchtenden Tabaksträngen ein doppelt langer Filterabschnitt eingesetzt wird und diese Gruppe aus Tabakstäben und Filterabschnitt mit einem beleimten Belagblättchen verbunden wird.

Wenn die Perforationen in die Umhüllung einer Doppelzigarette eingebracht werden sollen, wird die Doppelzigarette auf einer Trommel, im Falle der in Figur 1 gezeigten Filteransetzmaschine auf der Trockentrommel 24 oder der Sammeltrommel 28, in den Fokusbereich der beiden reflektierten und fokussierten Strahlen 52, 54 so gefördert (siehe Figur 4), dass zwei voneinander beabstandete, in Umfangsrichtung der Doppelzigarette 60 verlaufende ringförmige Perforationsspuren oder Lochreihen 62 und 64 entstehen, von denen die eine Perforationsspur 62 im Filterabschnitt der einen Zigarette und die andere Perforationsspur 64 im Filterabschnitt der anderen Zigarette ausgebildet wird, wie Figur 5 schematisch erkennen lässt.

Der schraubenförmige Verlauf der streifenförmigen Reflexionsabschnitte 46 bei Rotation des Drehspiegels 44 bzw. 45 erzeugt die gleiche Wirkung wie eine geneigte Ebene, die in Richtung ihrer Normalen verschoben wird, allerdings mit dem Unterschied, dass ein rotierender Drehspiegel mit schraubenförmiger Spiegelfläche eine wesentlich einfachere Kinematik bedingt. Zur Veranschaulichung der Wirkungsweise ist in Figur 4b eine Darstellung gezeigt, bei der zusätzlich zum Verlauf der schraubenförmigen Spiegelfläche zweier streifenförmigen Reflexionsabschnitte 46 die zugehörige Steigung als gestrichelte gerade Linie gezeigt ist. Die gestrichelte gerade Linie deutet zugleich auch den Verlauf der schraubenförmigen Spiegelfläche des zugehörigen streifenförmigen Reflexionsabschnittes 46 abgewickelt als geneigte Reflexionsfläche an. Deutlich in Figur 4b zu erkennen ist, dass durch Parallelverschiebung dieser Reflexionsfläche aus ihrer Anfangsstellung, in der sie mit dem Bezugszeichen 46-I bezeichnet ist, in die Endstellung, in der sie mit dem Bezugszeichen 46-II bezeichnet ist, der reflektierte Strahl einer Querbewegung unterworfen wird, und zwar von einer Anfangsstellung, in der der reflektierte Strahl in durchgezogenen Linien gezeigt und mit dem Bezugszeichen 48-I bezeichnet ist, in eine Endstellung, in der der reflektierte Strahl gestrichelt gezeigt und mit Bezugszeichen 48-II bezeichnet ist. Ferner lässt die Darstellung von Figur 4b anschaulich erkennen, dass nach Parallelverschiebung entsprechend dem Rotationswinkel bei Drehung des Drehspiegels 44 in Richtung des Pfeils B ein Rücksprung des einfallenden Laserstrahls 38 auf den Anfang des nächstfolgenden schraubenförmigen Reflexionsabschnitts 46 erfolgt, indem die Endstellung des vorangegangenen Reflexionsabschnitts 46-I mit der Anfangsstellung des nächstfolgenden Reflexionsabschnitts 46-II zusammenfällt.

Insbesondere auch aus Gründen einer besseren und zugleich platzsparenden Darstellung sind in Figur 4 die bereits erwähnten Reflexionsspiegel 58 gezeigt. Alternativ ist es aber auch denkbar, sofern es die Platzverhältnisse erlauben, die Reflexionsspiegel 58 bei der zweiten Ausführung gemäß Figur 4 wegzulassen und die reflektierten Strahlen 48, 49 direkt auf die Zigarette 60 zu fokussieren. Umgekehrt kann auch die erste Ausführung gemäß Figur 3 mit entsprechenden Reflexionsspiegeln ausgerüstet werden, sofern es die Platzverhältnisse erfordern.

Abschließend sei an dieser Stelle ebenfalls noch darauf hingewiesen, dass auch die erste Ausführung gemäß Figur 3 ähnlich wie die zweite Ausführung gemäß Figur 4 aus einer zwei Drehspiegel enthaltenden Doppelstrahl-Anordnung zur Perforation von Doppel-Zigaretten bestehen kann.

## Patentansprüche

1. Vorrichtung zum Herstellen von Zonen (62, 64) gewünschter Luftdurchlässigkeit im Hüllmaterial stabförmiger Gegenstände (60) insbesondere der Tabak verarbeitenden Industrie, mit einem um eine Drehachse (44a) drehbar gelagerten Drehkörper (44) mit mindestens einer Reflexionsfläche (46) zur Reflexion eines energiereichen Strahls (38) während der Rotation des Drehkörpers (44) zur Erzeugung von Perforationszonen (62) auf dem Hüllmaterial, wobei die Reflexionsfläche (46) mindestens einen Abschnitt (46) aufweist, der einen derart gebogenen oder gekrümmten Verlauf hat, dass bei Rotation des Drehkörpers (44) der von diesem Abschnitt (46) reflektierte Strahl (48) wandert,
**dadurch gekennzeichnet, dass** der gekrümmte Abschnitt (46) der Reflexionsfläche schraubenförmig verläuft.

2. Vorrichtung nach Anspruch 1,
**dadurch gekennzeichnet, dass** die Schraubenachse des gekrümmten Abschnitts (46) der Reflexionsfläche sich parallel zur Drehachse (44a) des Drehkörpers (44) erstreckt oder mit dieser zusammenfällt.

3. Vorrichtung nach Anspruch 1 oder 2,
**dadurch gekennzeichnet, dass** sich die Schraubenachse des gekrümmten Abschnitts (46) der Reflexionsfläche parallel zur Einfallsrichtung des Strahls (38) erstreckt.

4. Vorrichtung nach mindestens einem der vorangegangenen Ansprüche,
**dadurch gekennzeichnet, dass** der gekrümmte Abschnitt (46) der Reflexionsfläche streifenförmig ausgebildet ist.

5. Vorrichtung nach mindestens einem der vorangegangenen Ansprüche,
**dadurch gekennzeichnet, dass** der Drehkörper (44) die Form eines Zylinders hat, dessen Zylinderachse die Drehachse (44a) ist und um dessen Mantel herum die Reflexionsfläche (46) angeordnet ist.

6. Vorrichtung nach mindestens einem der vorangegangenen Ansprüche,
**dadurch gekennzeichnet, dass** die Reflexionsfläche (46) winklig zur Oberfläche des Drehkörpers (44) ausgerichtet ist.

7. Vorrichtung nach mindestens einem der vorangegangenen Ansprüche,
**dadurch gekennzeichnet, dass** die Reflexionsfläche eine bestimmte Anzahl von gekrümmten Abschnitten (46) aufweist, die voneinander getrennt angeordnet sind.

8. Vorrichtung nach Anspruch 7,
**dadurch gekennzeichnet, dass** zwischen den einzelnen gekrümmten Abschnitten (46) Sprünge oder Unstetigkeiten vorhanden sind.

9. Vorrichtung nach Anspruch 8,
**dadurch gekennzeichnet, dass** die Anfangsbereiche (46a) der gekrümmten Abschnitte (46) in einer ersten Ebene und die Endbereiche (46b) der gekrümmten Abschnitte (46) in einer zweiten Ebene liegen, wobei die beiden Ebenen parallel zueinander, vorzugsweise im wesentlichen quer zur Drehachse (44a) des Drehkörpers (44), verlaufen und voneinander beabstandet sind.

10. Vorrichtung nach Anspruch 9,
**dadurch gekennzeichnet, dass** die gekrümmten Abschnitte (46) der Reflexionsfläche über dem Umfang des Drehkörpers (44) im wesentlichen gleichmäßig verteilt angeordnet sind.

11. Vorrichtung nach mindestens einem der Ansprüche 7 bis 10,
**dadurch gekennzeichnet, dass** die gekrümmten Abschnitte (46) hinsichtlich ihrer Form, Verlauf, Richtung und/oder Steigung im wesentlichen übereinstimmen.

12. Vorrichtung nach mindestens einem der vorangegangenen Ansprüche,
**dadurch gekennzeichnet, dass** der gekrümmte Abschnitt (46) der Reflexionsfläche eine Steigung von etwa 45° gegenüber der Drehachse (44a) des Drehkörpers (44) aufweist.

## Claims

1. Apparatus for producing zones (62, 64) of desired air permeability in the wrapping material of rod-shaped articles (60), in particular in the tobacco-processing industry, comprising a rotary body (44) which is mounted rotatably about an axis of rotation (44a), with at least one reflection surface (46) for reflection of a high-energy beam (38) during the rotation of the rotary body (44) to produce perforation zones (62) on the wrapping material, wherein the reflection surface (46) has at least one portion (46) which is is of a bent or curved configuration such that upon rotation of the rotary body (44) the beam (48) reflected by said portion (46) travels, **characterised in that** the curved portion (46) of the reflection surface extends in a helical configuration.

2. Apparatus according to claim 1 **characterised in that** the axis of the helix of the curved portion (46) of the reflection surface extends parallel to the axis of rotation (44a) of the rotary body (44) or coincides therewith.

3. Apparatus according to claim 1 or claim 2 **characterised in that** the axis of the helix of the curved portion (46) of the reflection surface extends parallel to the direction of incidence of the beam (38).

4. Apparatus according to at least one of the preceding claims **characterised in that** the curved portion (46) of the reflection surface is of a strip-shaped configuration.

5. Apparatus according to at least one of the preceding claims **characterised in that** the rotary body (44) is in the form of a cylinder whose axis is the axis of rotation (44a) and around the periphery of which is arranged the reflection surface (46).

6. Apparatus according to at least one of the preceding claims **characterised in that** the reflection surface (46) is oriented at an angle relative to the surface of the rotary body (44).

7. Apparatus according to at least one of the preceding claims **characterised in that** the reflection surface has a given number of curved portions (46) which are arranged separatedly from each other.

8. Apparatus according to claim 7 **characterised in that** jumps or discontinuities are present between the individual curved portions (46).

9. Apparatus according to claim 8 **characterised in that** the starting regions (46a) of the curved portions (46) are in a first plane and the end regions (46b) of the curved portions (46) are in a second plane, wherein the two planes extend parallel to each other, preferably substantially transversely with respect to the axis of rotation (44a) of the rotary body (44), and are spaced from each other.

10. Apparatus according to claim 9 **characterised in that** the curved portions (46) of the reflection surface are arranged distributed substantially uniformly over the periphery of the rotary body (44).

11. Apparatus according to at least one of claims 7 to 10 **characterised in that** the curved portions (46) are substantially identical in terms of their shape, configuration, direction and/or gradient.

12. Apparatus according to at least one of the preceding claims **characterised in that** the curved portion (46) of the reflection surface has a gradient of about 45° with respect to the axis of rotation (44a) of the rotary body (44).

## Revendications

1. Dispositif pour la fabrication de zones (62, 64) présentant une perméabilité à l'air d'une valeur désirée dans le matériau enveloppant des objets en forme de barreau (60), notamment de l'industrie du tabac, pourvu d'un corps rotatif (44) tournant autour d'un axe de rotation (44a) et présentant au moins une surface réfléchissante (46) qui assure la réflexion d'un faisceau de rayonnement (38) de haute énergie durant la rotation dudit corps rotatif (44), afin de générer des zones présentant des perforations (62) sur la matériau d'enveloppe, la surface de réflexion (46) présentant au moins une section (46) dont la forme est à tel point repliée ou courbée, que le faisceau de rayonnement (48) réfléchi par ladite section (46) décrit un déplacement migratoire durant la rotation dudit corps rotatif (44),
**caractérisé en ce que** la section courbée (46) de la surface réfléchissante présente une forme en spirale.

2. Dispositif selon la revendication 1,
**caractérisé en ce que** l'axe en spirale de la section courbée (46) de la surface réfléchissante est ou bien parallèle à l'axe de rotation (44a) du corps rotatif (44), ou bien coïncide avec cette dernière.

3. Dispositif selon l'une quelconque des revendications 1 et 2,
**caractérisé en ce que** l'axe en spirale de la section courbée (46) de la surface réfléchissante est parallèle à la direction d'incidence du faisceau de rayonnement (38).

4. Dispositif selon au moins l'une des revendications précédentes,
**caractérisé en ce que** la section courbée (46) de la surface réfléchissante présente une structure en forme de lanière.

5. Dispositif selon au moins l'une des revendications précédentes,
**caractérisé en ce que** ledit corps rotatif (44) présente la forme d'un cylindre dont l'axe est l'axe de rotation (44a), la surface réfléchissante (46) étant disposée autour de l'enveloppe dudit cylindre.

6. Dispositif selon au moins l'une des revendications précédentes,
**caractérisé en ce que** la surface réfléchissante (46) est orientée formant un angle avec la surface du corps rotatif (44).

7. Dispositif selon au moins l'une des revendications précédentes,
**caractérisé en ce que** la surface réfléchissante présente un certain nombre de sections courbées (46), séparées les unes des autres.

8. Dispositif selon la revendication 7,
**caractérisé en ce qu'**il y a des dénivellations ou des discontinuités entre les sections courbées (46).

9. Dispositif selon la revendication 8,
**caractérisé en ce que** les zones initiales (46a) des section courbées (46) sont situées dans un premier plan et **en ce que** les zones finales (46b) desdites sections courbées (46) sont situées dans un second plan, les deux plans étant parallèles entre eux, orientés préférentiellement de manière transversale à l'axe de rotation (44a) du corps rotatif (44), et se trouvant séparés l'un de l'autre par une certaine distance.

10. Dispositif selon la revendication 9,
**caractérisé en ce que** les sections courbées (46) de la surface réfléchissante sont essentiellement réparties de manière uniforme autour de la surface périphérique du corps rotatif (44).

11. Dispositif selon au moins l'une des revendications 7 à 10,
**caractérisé en ce que** les sections courbées (46) coïncident essentiellement entre elles tant en ce qui concerne leur forme que leur orientation, leur direction et/ou leur pente.

12. Dispositif selon au moins l'une des revendications précédentes,
**caractérisé en ce que** la section courbée (46) de la surface réfléchissante présente une pente d'environ 45° par rapport à l'axe de rotation (44a) du corps rotatif (44).
